# EUROPEAN PATENT SPECIFICATION

(11) **EP 3 704 626 B1**
(45) Date of publication and mention of the grant of the patent: **21.10.2026**
(21) Application number: 18804805.2
(22) Date of filing: 31.10.2018
(51) Int. Cl.: G06V 10/82, G06V 20/52, G06V 10/778

(54) **SYSTEMS AND METHODS FOR OPTICAL MATERIAL CHARACTERIZATION OF WASTE MATERIALS USING MACHINE LEARNING**
SYSTEME UND VERFAHREN ZUR OPTISCHEN MATERIALCHARAKTERISIERUNG VON ABFALLMATERIALIEN MITHILFE VON MASCHINENLERNEN
SYSTÈMES ET PROCÉDÉS POUR CARACTÉRISATION MATÉRIELLE OPTIQUE DE DÉCHETS PAR APPRENTISSAGE AUTOMATIQUE

(30) Priority: 02.11.2017 US 201762580720 P
(43) Date of publication of application: 09.09.2020
(73) Proprietor: Amp Robotics Corporation, Louisville, Colorado 80027 (US)
(72) Inventor: HOROWITZ, Matanya B., Louisvile Colorado 80027 (US); BAILEY, James A., Louisville Colorado 80027 (US)
(74) Representative: WP Thompson
(86) International application number: PCT/US2018/058552
(87) International publication number: WO 2019/089825

(56) References cited:
- WO-A2-2014/179667
- US-B2- 7 449 655
- ZHIHONG CHEN ET AL: "A vision-based robotic grasping system using deep learning for garbage sorting", 2017 36TH CHINESE CONTROL CONFERENCE (CCC), TECHNICAL COMMITTEE ON CONTROL THEORY, CAA, 26 July 2017 (2017-07-26), pages 11223 - 11226, XP033150528, [retrieved on 20170907], DOI: 10.23919/CHICC.2017.8029147
- DR TUOMAS ET AL: "ZenRobotics Recycler - Robotic Sorting using Machine Learning", 13 March 2014 (2014-03-13), XP055551303, Retrieved from the Internet <URL:https://users.ics.aalto.fi/praiko/papers/SBS14.pdf> [retrieved on 20190204]
- SATHISH PAULRAJ GUNDUPALLI ET AL: "A review on automated sorting of source-separated municipal solid waste for recycling", WASTE MANAGEMENT., vol. 60, 20 September 2016 (2016-09-20), US, pages 56 - 74, XP055551300, ISSN: 0956-053X, DOI: 10.1016/j.wasman.2016.09.015

## Description

### CROSS-REFERENCE TO RELATED APPLICATIONS

This U.S. Patent Application claims priority to, and the benefit of, U.S. Provisional Patent Application No. 62/580,720 titled "SYSTEMS AND METHODS FOR OPTICAL MATERIAL CHARACTERIZATION OF WASTE MATERIALS USING MACHINE LEARNING" filed on Nov. 2, 2017.

### BACKGROUND

Within many industrial facilities, objects are transported on conveyor belts from one location to another. Often a conveyor belt will carry an unsorted mixture of various objects and materials. In some instances, like within recycling and waste management facilities for example, some of the objects may be considered desirable (e.g. valuable) materials while others may be considered undesirable contaminants. For example, the random and unsorted contents of a collection truck may be unloaded at the facility onto a conveyor belt. At that point the facility operator does not really know specific details about the types of material that have just been received. The facility operator may therefore wish to be able to identify what material is being carried on the conveyor belt in order to gather data about the type of material being conveyed, and/or to identify target material for removal from the conveyor belts such as by a sorting robot. Although sorting personnel may be stationed to manually sort and catalog materials as it is transported on the belt, the use of sorting personnel is limiting because they can vary in their speed, accuracy and efficiency and can suffer from fatigue over the period of a shift.

"ZenRobotics Recycler - Robotic Sorting using Machine Learning" by Dr. Tuomas J. Lukka, Dr. Timo Tossavainen, Dr. Janne V. Kujala, and Dr. Tapani Raiko describes a system that sorts construction and demolition (CND) waste by picking valuable objects from a conveyor belt using robotic hands. The described CND recycling system that attempts to achieve a useful purity of wood, stone, and metal without resorting to human sorters. Machine learning is applied to solve problems such as recognizing materials and grasping irregular objects from a waste stream on a conveyor.

"A review on automated sorting of source-separated municipal solid waste for recycling" by Sathish Paulraj Gundupalli et al describes physical processes, sensors, and actuators used as well as control and autonomy related issues in the area of automated sorting and recycling of source-separated municipal solid waste.

US 7,449,655 describes apparatus for classifying objects in an input waste stream, which comprises a hyperspectral sensor, means for moving objects in the input waste stream relative to the sensor and through a sensing region thereof, and processing means for classifying objects in the input waste stream on the basis of signals output from the hyperspectral sensor to the processing means. The apparatus allows classification of objects composed of one of a wide range of materials and also provides for discrimination of objects comprising different grades of the same material.

WO 2014/179667 describes a method and system that provide support for instructing a user as to an appropriate solid waste receptacle to discard a solid waste item into based on identification of the solid waste item. An image of the solid waste item is captured prior to being discarded in a solid waste receptacle. The solid waste item is classified into a solid waste item type based on the captured image of the solid waste item. The solid waste item type is associated with a recommended disposition method to dispose of the solid waste item. The user is instructed to discard the solid waste item into the appropriate solid waste receptacle based on the recommended disposition method of the solid waste item.

"A vision-based robotic grasping system using deep learning for garbage sorting" by Chen Zhihong, Zou Hebin, Wang Yanbo, Liang Binyan, and Liao Yu proposes a robotic grasping system for automatically sorting garbage based on machine vision, that achieves the identification and positioning of target objects in complex backgrounds before using a manipulator to automatically grab the sorting objects.

For the reasons stated above and for other reasons stated below which will become apparent to those skilled in the art upon reading and understanding the specification, there is a need in the art for systems and methods for optical material characterization of waste materials using machine learning.

### SUMMARY

The embodiments of the present disclosure provide methods and systems for optical material characterization of waste materials using machine learning and will be understood by reading and studying the following specification.

According to an aspect of the present invention, there is provided a system according to any of claims 1 to 12.

According to another aspect of the present invention, there is provided a method according to any of claims 13 to 20.

In one embodiment, an optical material characterization system comprises: at least one imaging device configured to generate image frames that capture an image of an area and one or more target objects within the area; an object characterization processor coupled to the at least one imaging device and comprising one or more Neural Processing Units and a Neural Network Parameter Set, wherein the Neural Network Parameter Set stores learned parameters utilized by the one or more Neural Processing Units for characterizing the one or more target objects; wherein the one or more Neural Processing Units are configured by the Neural Network Parameter Set to detect a presence of a plurality of different materials within the image frames based on a plurality of different features; and wherein for a first image frame of the plurality of image frames, the one or more Neural Processing Units outputs material characterization data that identifies which of the plurality of different materials are detected in the first image frame.

### DRAWINGS

Embodiments of the present disclosure can be more easily understood and further advantages and uses thereof more readily apparent, when considered in view of the description of the preferred embodiments and the following figures in which:
Figure 1 is a diagram illustrating an optical material characterization system of one embodiment of the present disclosure;
Figure 2 is a diagram illustrating operation of neural processing units of an object characterization processor of one embodiment of the present disclosure;
Figure 3 is a diagram illustrating an example structure for one embodiment of a neural network of the neural processing units;
Figure 4 is a diagram of a Fully Convolutional Neural Network of one embodiment of the present disclosure;
Figure 5 is a diagram illustrating an example display of material characterization data at a user interface device for one embodiment of the present disclosure;
Figures 6, 7 and 7A is a diagram illustrating another optical material characterization system of one embodiment of the present disclosure;
Figure 8 is a diagram illustrating a process for differentiating newly collected materials from previously collected materials for one embodiment of the present disclosure; and
Figure 9 is a diagram illustrating another example display of material characterization data at a user interface device for one embodiment of the present disclosure.

In accordance with common practice, the various described features are not draw to scale but are drawn to emphasize features relevant to the present disclosure. Reference characters denote like elements throughout figures and text.

### DETAILED DESCRIPTION

The scope of the invention is defined by the appended claims. In the following detailed description, reference is made to the accompanying drawings that for a part hereof, and in which is shown by way of specific illustrative embodiments in which the embodiments may be practiced. These embodiments are described in sufficient detail to enable those skilled in the art to practice the embodiments. and it is to be understood that other embodiments may be utilized and that logical, mechanical and electrical changes may be made without departing from the scope of the present disclosure. The following detailed description is, therefore, not to be taken in a limiting sense.

In many industrial facilities such as recycling and/or other waste sorting facilities, materials are often transported via conveyer belts as various sorting machinery segregates the waste materials based on various criteria such as material type. For example, an initial material intake conveyer belt may transport a collection of mixed waste including., for example, glass, plastics and cardboard objects. Sorting machinery, as the waste material is conveyed, may be used to selectively sort and transfer different objects to different parts of the facility based on their material type. For example, glass bottles may be segregated and transported to a different part of the facility that plastic milk containers. Although waste products travelling on a conveyer belt are used as example target objects in the example embodiments described herein, it should be understood that in alternate implementations of these embodiments, the target objects need not be waste materials but may comprise and type of material for which it may be desired to sort and/or segregate. Moreover, although a conveyer belt is used as an example conveyance mechanism for transporting the target objects within reach of the suction gripper, it should be understood that in alternate implementations of these embodiments, other conveyance mechanism may be employed. For example, for any of the embodiments described below, in place of an active conveyance mechanism such as conveyor belt, an alternate conveyance mechanism may comprise a chute, slide or other passive conveyance mechanism through and/or from which material tumbles, falls, or otherwise is gravity fed as it passes by the imaging device.

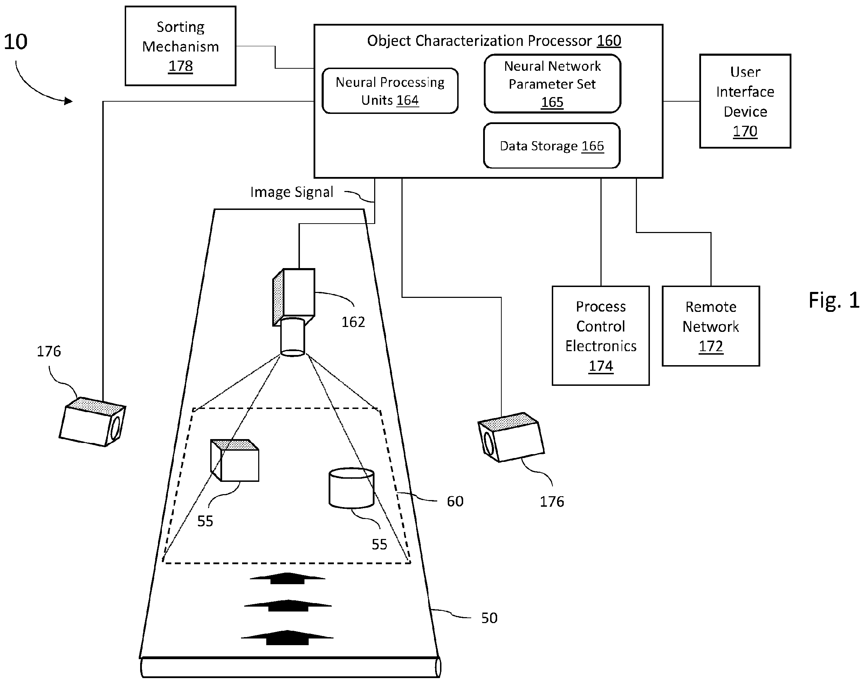

Figure 1 is a diagram illustrating an optical material characterization system 10 of one embodiment of the present disclosure. As shown in Figure 1, the optical material characterization system 10 comprises at least one imaging device 162 directed at a conveyer belt 50 which transports one or more target objects (shown at 55). In some embodiments the imaging device 162 comprises a camera sensor that captures visual spectrum images of the target objects 55 carried by the conveyor belt 50. In other embodiments, the imaging device 162 may also, or instead, comprise infrared (IR) and/or ultraviolet (UV) sensors that capture IR and/or UV images of the target objects 55. As such, the imaging device 162 may comprise visual spectrum, IR, or UV sensors, or some combination thereof. It should also be appreciated that the imaging device 162 may instead, or further, comprise other types of sensors that may be used to generate an image, such as but not limited to a magnetic sensor or a hyperspectral image sensor. In the embodiment shown in Figure 1, the imaging device 162 functions as an area sensor that captures a two dimensional image (also referred to herein as an image "frame") of an area 60 of the conveyor belt 50, along with any objects 55 that are within that area 60. In other embodiments, the imaging device 162 may comprise a line scanner that captures a strip or slice of the conveyor belt 50 and its contents. These image strips may then be digitally spliced to generate a composite image frame of area 60.

The imaging device 162 is in communication with an object characterization processor 160 that comprises one or more Neural Processing Units 164 and a Neural Network Parameter Set 165 (which stores learned parameters utilized by the Neural Processing Units 164). In some embodiments, the imaging device may also comprise a Data Storage 166 that stores the raw images received from the imaging device 162, processed images comprising labeled data, and may further be used to store other data such as material characterization data generated by the Neural Processing Units 164. The Neural Network Parameter Set 165 and Data Storage 166 may either be implemented together on a common physical non-transient memory device, or on separate physical non-transient memory devices. In some embodiments, the Data Storage 166 may comprise a random access memory device, or removable storage media.

For some embodiments, the resulting material characterization data output stored by the object characterization processor 160 (which in some embodiments may be stored to the data storage 166) may comprise a tally of what different materials are present in the image frame. In some embodiments, as further described below, the resulting material characterization data may further provide how many objects of each material type are present in the image frame and/or the location of the identified objects within the frame. For example, the material characterization data may indicate that there are 3 aluminum cans within the image frame and provide coordinates for the geometric center of each can and/or an estimate of certain identified features such as the shape and/or dimensions of the object. In some embodiments, the object characterization processor 160 outputs one or more physical object attributes determined by the one or more Neural Processing Units based on visional inspection of the one or more target objects

The object characterization processor 160 as shown in Figure 1 is implemented as a discrete physical device comprising processing electronics separate from those of the imaging device 162. In that case, the object characterization processor 160 would receive the image signals from the imaging device 162 via a wired or wireless communication link. Alternatively, the imaging device 162 and object characterization processor 160 may be integrated into a single physical electronics device and comprise the processors, memory and other electronics to implement the embodiments described herein. In various embodiments, the object characterization processor 160 may be implemented using a microprocessor coupled to a memory that is programed to execute code to carry out the functions of the object characterization processor 160 described herein. In other embodiments, the object characterization processor 160 may additionally, or alternately, be implemented using an application specific integrated circuit (ASIC) or field programmable gate array (FPGA) that has been adapted for machine learning.

As shown in Figure 1, the object characterization processor 160 may further be coupled to at least one user interface device 170 (which may comprise a display and/or user input interface such as a keyboard and/or touchscreen, for example), a remote network 172 and/or process control electronics 174. In some embodiments, the user interface device 170 provides a user access to the Data Storage 166 so that a user may monitor images captured by the imaging device 162 and associated material characterization data generated by the object characterization processor 160. Where Data Storage 166 comprises a removable storage media, that media may be inserted into a separate user terminal and similarly reviewed by a user. In some embodiments, the object characterization processor 160 may transmit the contents of the data storage 166 to one or more remote storage devices connected to the remote network 172 (via either wired or wireless network connections) or to a remote user interface device 170 (via either wired or wireless network connections) to provide access to the images and material characterization data.

As also shown in Figure 1, the optical material characterization system 10 may comprise one or more light sources 176 controlled by the object characterization processor 160 to illuminate the target objects 55 within the area 60 of the conveyor belt 50 as the imaging device 162 captures images of area 60 and its contents. In some embodiments, the object characterization processor 160 selectively controls separate light sources 176 that illuminate area 60 from different angles. Alternately, separate light sources 176 may selectively illuminate the area 60 and its contents using different spectrums and/or wavelengths of light, as further discussed below. In this way, the object characterization processor 160 may obtain from imaging device 162 multiple images of the same target object 55 under more than one lighting condition, which may provide data that can distinguish different materials from each other, or be used to enhance estimates of an object's size and dimensions, for example.

In operation the imaging device 162 is directed downward towards the conveyor belt 50 in order to capture an overhead view of the materials 55 being transported by the conveyor belt 50. The imaging device 162 produces an image signal that is delivered to the object characterization processor 160. Within the object characterization processor, these image frames are provided input to one or more neural network and artificial intelligence algorithms (shown as the Neural Processing Units 164) to locate and identify material appearing within the image frames.

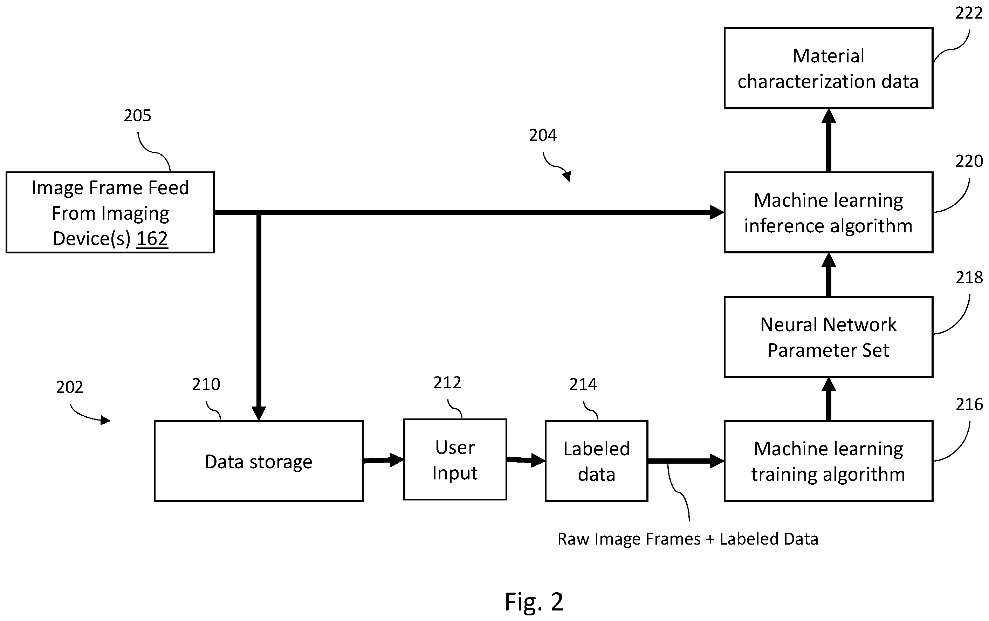

Referring to Figure 2, the Neural Processing Units 164 executed within the object characterization processor 160 operate in two modes: 1) a machine learning training mode (shown generally at 202), and 2) a machine leaning inference mode (shown generally at 204). Operating in the machine learning training mode, the Neural Processing Units 164 derive the Neural Network Parameter Set 165 which is then used by the Neural Processing Units 164 in the machine leaning inference mode to produce the material characterization data.

As shown in Figure 2, a feed of image frames captured by the imaging device 162 (shown at 205) is stored into the data storage 166 (shown at 210) to obtain a collection of image frames. For each of these stored image frames, a user (for example, using user interface display 170 or remotely connecting to the object characterization processor 160 via the remote network 172) manually reviews the image (shown at 212) to produce labeled data (shown at 214). This labeled data 214 is stored back into the data storage 166. To produce the labeled data 214, the user view a captured image frame and via a user interface identifies where objects 55 are present in the image fame (i.e. the objects location within the image) and what the objects are. For example, the user may point to or circle an object with the user interface and then tag the object with one of a predetermined set of labels based on what the user thinks the object is. For example, the user may visually identify a first object at a first position within in the image as being a plastic bottle, and therefore tag it with a "plastic bottle" label. The user may identify a second object at a second position within in the image as an aluminum can, and tag it with an aluminum can" label. Further details regarding examples of the process of labeling images which may be used in the present embodiments may be found in the reference "WHAT WE LEARNED LABELING I MILLION IMAGES: A practical guide to image annotation for computer vision, CrowdFlower Ine., 2017 . When the user has completed identifying and tagging the objects in the image frame, the labeled data 214 is saved back into the data storage 166 and associated with the raw image frame reviewed by the user to create the labeled data 214.

Once the user can completed generating the labeled data 214 for a for the set of raw image frames, both the labeled data 214 and raw image frames are entered into a machine learning training algorithm 216 which encodes the information (for example, by defining a set of pixels for an object within the raw image frames as being the type material identified by the label with which it was tagged) and from that produce the Neural Network Parameter Set 165 (shown at 218) that teaches the Neural Processing Units 164 how to identify material in subsequent images that will be provided when operating in machine leaning inference mode. In the machine learning training mode the Neural Network Parameter Set 165 is generated using the machine earning training algorithm 216 to produce an optimized set of parameters. The purpose of these parameters is to configure the Neural Processing Units 164 to make the same decision as the user made when producing the labeled data (though not necessarily for the same reasons). One of ordinary skill in the art would appreciate that there are a number of machine learning algorithms which may be utilized to implement the machine learning training algorithm 216. Therefore, the machine learning training algorithm 216 may comprise an algorithm, such as but not limited to Stochastic Gradient Descent (SGD), Adaptive Moment Estimation (ADAM), Root Mean Square Propagation (RMSProp), Nesterov's First Order Method, the Adaptive Gradient Algorithm (AdaGrad), and/or variants thereof that would be known to those of ordinary skill in the art. For example, for additional information regarding one of more of these algorithms which may be used in conjunction with the embodiments describer here, see Kingma et al., "ADAM: A METHOD FOR STOCHASTIC OPTIMIZATION", Proceedings of the 3rd International Conference for Learning Representations, San Diego, 2015.

The output from the machine learning training algorithm 216 is the Neural Network Parameter Set 165 that allows the Neural Processing Units 164 to identify material in the image frames. In some embodiments, the parameters that comprise the Neural Network Parameter Set 165 are associated with various features of the imaged objects such as, but not limited to hues, texture, grain, reflectance, printed graphics, edges, corners, and so forth. In one embodiment, the Neural Processing Units 164 each comprise multiple processing layers (referred to a "neurons") such that each processing layer searches for a particular feature from the data. For example, hue may be one feature considered by a processing layer of the Neural Processing Units 164. If the target object has a hue within a first range of hues that has a high correlation with the hues of a milk carton, then that features weights in favor for the object being a milk carton. If the object in the image instead has a hue within a second range of hues that has a low correlation with the hues of a milk carton, then that features weights in favor of the object not being a milk carton. Such correlations would be determined using neural network parameters defined for the particular feature as stored in the Neural Network Parameter Set 165. Other processing layers within the Neural Processing Units 164 would look for correlations for other features of the object in the image frame. However, it should be noted that which features of the object are important to consider and/or work best for differentiating objects are determined during training of the Neural Processing Units 164 with the machine learning training algorithm 216.

Once the Neural Network Parameter Set 165 has been generated, the object characterization processor 160 and Neural Processing Units 164 may begin operation in the machine leaning inference mode 204 in which the Neural Processing Units 164 is operating to detect materials within the image frame rather than learn. It should be noted that once a Neural Network Parameter Set 165 is generated, those parameters may be stored within and used by the same object characterization processor 160 and Neural Processing Units 164 which created them. Alternatively, the Neural Network Parameter Set 165 generated by one object characterization processor 160 may optionally be distributed and loaded for use onto another object characterization processor 160 expected to perform the same task as the object characterization processor 160 and Neural Processing Units 164 which created them under the same conditions.

During operation in machine leaning inference mode (shown at 204), the feed of image frames 205 captured by the imaging device 162 is fed directly to the machine learning inference algorithm 220, where it is sequentially processed by each of the multiple processing layers, or neurons, of the Neural Processing Units 164 to evaluate the correlation of specific features with features of objects that it has previously learned.

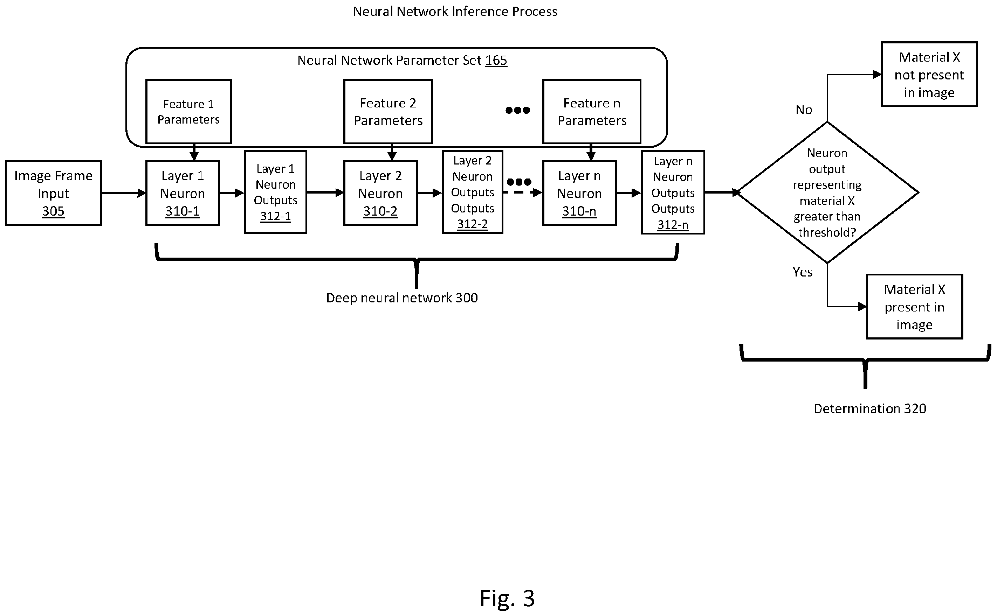

An example structure for one embodiment of a neural network of the Neural Processing Units 164 is illustrated generally at 300 in Figure 3. As shown in Figure 3 at 305, the image frame captured by the imaging device 162 into the first layer neuron 310-1. It should be appreciated that when an image frame is captured by the imaging device 162, a particular object may only partially appear within the frame and/or may straddle across consecutive frames. As such, imaging device 162 may be operated to selectively capture either overlapping or non-overlapping frame sequences. For example, because the speed at which objects 55 travel on the conveyor belt 50 is known and is typically constant, then the object characterization processor 160 can input two consecutive frames and calculate how much of one frame overlaps with the next to negate duplicative object data. Similarly, the object characterization processor 160 may discard captured image frames until a frame is captured that contains only new data. If some materials have not yet completely entered area 60, then characterization processor 160 may wait until those objects are entirely in-frame before processing an image frame.

The first layer neuron 310-1 is configured using the Neural Network Parameter Set 165 to detect a specific feature or combination of features. More specifically, the Neural Network Parameter Set 165 comprises a subset of parameters learned during the machine learning training mode that are associated with this first layer neuron 310-1 for the purpose of detecting this feature. The first layer neuron 310-1 generates a plurality of neuron outputs 312-1 that characterize the presence of that feature in the image frame 305. For example, if the feature evaluated by the first layer neuron 310 is hue, then the neuron outputs 312-1 may comprise outputs from multiple nodes of the first layer neuron 310-1. one output for each hue that the first layer neuron 310-1 is trained to detect. If the feature evaluated by the first layer neuron 310 is hue, then nodes of the neuron outputs 312-1 that are associated with any detected hues will go high. Nodes of the neuron outputs 312-1 not associated with detected hues will go low.

The neuron outputs from the first layer neuron 310-1 are fed as inputs to the second layer neuron 310-2 which, in the same way, evaluates the image frame for a different feature or combination of features. The neuron outputs 312-2 from the second layer neuron 310-2 are fed as inputs to the next neuron to produce neuron outputs, and the layers repeat so forth to neuron 310-n, each layer detecting a different feature or combination of features, and configured by a subset of parameters learned during the machine learning training mode that are associated with that layer neuron for the purpose of detecting that feature. The final neuron outputs 312-n from the output neuron 310-n each respectively represent a confidence level that a particular material is present in the image frame 305. In other words, the final output neuron 310-n will comprise an output node for each of the possible materials that the Neural Processing Units 164 have learned, and output a value indicating a confidence level that the object comprises the material associated with that node. If an object in the image comprises an aluminum can, then a node of the output neuron 310-n associated with aluminum cans should provide an output with a high confidence value. Meanwhile, the nodes of the output neuron 310-n associated with other materials should provide an output with a low confidence value. In some embodiments, a confidence threshold is established to make the determination as to whether an object of a certain material is present in the image. This determination is shown at 320 in Figure 3. For example, if a confidence threshold for aluminum cans is set for 0.5 and the output node from neuron 310-n for aluminum cans outputs a value of 0.3, then the determination at 320 would conclude that no aluminum can is present in the processed image frame 305. Conversely, if the output node from neuron 310-n for aluminum cans outputs a value of 0.6, then the determination at 320 would conclude that at least one aluminum can is present in the image frame. In some embodiments, the same confidence threshold may be used for all materials. In other embodiments, the confidence threshold for different materials may vary. For example, a confidence threshold used for silver, gold, or other precious (high value) materials may be set low (for example 0.1) as compared to lesser value materials, in order to ensure a greater chance that such materials are identified as present and do not proceed into the system undetected.

The process described in Figure 3 may generally be referred to by those of skill in the art of machine learning as a "Classification process because it processes the provided image frame in order to determine what material may be present in the image frame. In order to provide further details about the objects present in the image frame, such as the number of objects comprising each detected material, and the location, shape, orientation, and dimensions of these objects in the image frame, a "Segmentation" or similar process known to those in the art of machine learning may be used. Alterative algorithms to detect objects within an image include Fully Convolutional Neural Network, Multibox, Region-based Fully Convolutional Networks (R-FCN). Faster R-CNN, and other techniques commonly known to those skilled in the art as object detection, instance-aware segmentation, or semantic segmentation algorithms described in available literature. Further details regarding examples of the process of detecting objects in captured images which may be used in the present embodiments may be found in the reference Huang et al., "Speed/accuracy trade-offs for moder convolutional object detectors" The IEEE Conference on Computer Vision and Pattern Recognition (CVPR), 2017, pp. 7310-7311 .

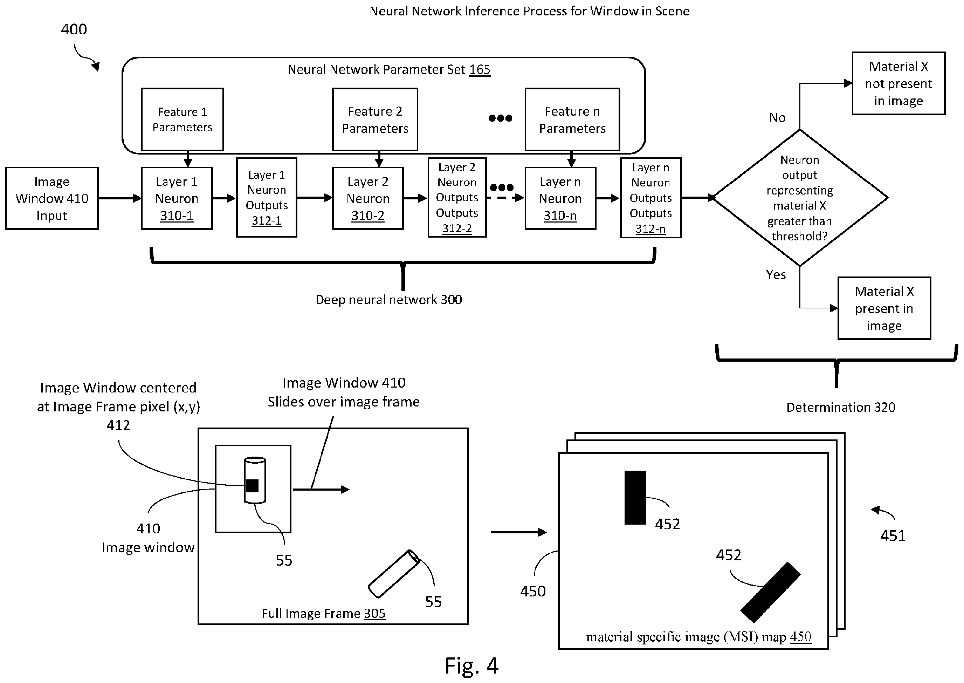

One such process is illustrated by the example embodiments shown in Figure 4. Figure 4 illustrates generally at 400 a Fully Convolutional Neural Network which may be referred to by those of skill in the art of machine learning as a Machine Leaning Based Segmentation Algorithm." In the process 400 shown in Figure 4, as opposed to feeding the entirety of a captured image frame into the neural network 300 of the Neural Processing Units 164, a cropped image frame 410 (referred to herein as an "image window") comprising a portion of the full image frame captured by imaging device 162 is fed as the input to the segmentation process shown in Figure 3. Moreover, the neural network 300 is trained to provide an output specifically indicating the material detected at a center pixel 412 of the image window 410 that corresponds to a pixel at location (,y) of the full image frame. In other words, when the image window 410 is fed in as the input to the neural network 300, the neuron output 312-n for a particular material will go high only if that material is detected as overlapping the center pixel 412 of the image window 410. In this way, the Neural Processing Units 164 can specifically identify that an object comprising that specific material is present at pixel location (,y) of the full image frame. Then, by incrementally sweeping the position of the image window 410 over the entirety of the full image frame, feeding the image windows 410 at each increment into the neural network 300, each pixel location (x,y) of the full image frame in which an object that comprises that specific material is present can be identified to produce a composite material specific image (MSI) map 450 for that material. For example, assuming that the MSI map 450 shown in Figure 4 applies to aluminum cans, then as the Neural Processing Units 164 detect that the material overlapping the center pixel 412 of the image window 410 is an aluminum can, then the corresponding pixel location in the MSI map 450 may be set to high. When the Neural Processing Units 164 detect that the material overlapping the center pixel 412 of the image window 410 is anything other than an aluminum can, then the corresponding pixel location in the MS1 map 450 may be set to low. The resulting MSI map 450 will comprise a pattern of pixels set high (shown at 452) where aluminum cans have been determined to exists. further indicating their size an orientation. This same process may be simultaneously performed for each of the different material that the Neural Processing Units 164 is trained to detect as each image window 410 is processed so that multiple MSI maps 450 may be generated in parallel (shown at 451). For example, if the Neural Processing Units 164 is trained to detect 50 distinct materials, then 50 MSI maps 450 may be generated in parallel, each respective MSI map 450 dedicate to illustrating where a particular material, and thus a corresponding object 55, is present in the full image frame. The MSI maps 450 represent material characterization data that may be stored into the Data Storage 166 as described above, accessed by a user via a user interface display 170 transmitted to remote storage or a remote user interface display via a remote network 172, used to automatically activate or control other facility machinery via process control electronics 174, and/or provided as input used by other facility machinery such as a sorting robot (such as described by any of the embodiments disclosed in US. Provisional Patent Application No. 62/561,400, titled SYSTEMS AND METHODS FOR ROBOTIC SUCTION GRIPPERS" and filed on September 21, 2017 or air jet sorting mechanism or other sorting mechanism (shown at sorting mechanism 178). Although this specification describes specific examples, it should be noted that any of the Segmentation techniques known to those versed in the art may be used in alternated embodiments to generate the MSI maps discussed herein.

In some embodiments, rather than an MSI map 450 depicting where a particular material, and thus a corresponding object 55, is present in the full image frame, the MSI map 450 may be further defined based on a region of the object 55 that has a high correlation with a particular feature evaluated by the Neural Processing Units 164. For example, sorting mechanism 178 may be provided one or more MSI maps 450 by object characterization processor 160 in order to drive the sorting mechanism 178 to capture and remove objects appearing in those MSI maps. In some embodiments, the MSI maps 450 provided by object characterization processor 160 may be further refined to identify the specific surface areas of the identified objects having features that present the best surface for the gripper of the sorting mechanism 178 to attempt to grip. The gripper of the sorting mechanism 178 would have a higher probability of successfully capturing the object by gripping these surface areas of the identified objects as opposed to other areas. For example, where the sorting mechanism 178 comprises a suction gripper that it utilized to capture and remove target objects, the MSI maps 450 may highlight those pixel coordinates corresponding to regions having characteristics most easily captured using a suction gripper (for example, region of the object comprising a flat surface, or at least the flattest surface). In one embodiment, instead of an MSI map 450 for a given material having pixel set to high based on the Neural Processing Units 164 detecting that the material overlapping the center pixel 412 of the image window 410 comprises that given material, it would instead be set to high when the material overlapping the center pixel 412 of the image window 410 comprises that given material and presents the best surface on the target object for the sorting mechanism 178 to attempt to grasp to capture the target object. When the sorting mechanism 178 receives that MSI map 450, it will thus know not only which objects on the conveyor belt should be picked and removed, but the best location on the object for it to attempt to grasp using its gripper.

As mentioned above, illuminating target objects 55 using a diversity of light sources from different angles or using different spectrum may provide additional data which may be used to better differentiate different materials that may appear similar under standard lighting conditions. As such, in some embodiments the object characterization processor 160 controls the light sources 176 so that imaging device 162 captures multiple image frames of the objects 55 in area 60 in succession under different lighting conditions. For example, two or more light sources 176 may be flashed from different angles to generate images with different shadows for the same objects to provide contextual information that is used, for example, to determine the dimensions of a single object, or distinguish separate objects from each other. Alternately, the light sources 176 may illuminate the objects 55 using light comprising different wavelengths while imaging device 162 captures multiple image frames of the objects 55 in area 60 in succession. For example, the light sources 176 may switch between visible spectrum frequencies (such as red, blue, yellow). Further, the light sources 176 may switch between a first spectrum of visible light and a second spectrum of non-visible light. For example, some materials may emit a fluorescence under UV lighting that may distinguish them from other materials that look the same under visible light.

In such embodiments, the collection images frames for the set of objects 55 within area 60 under the different lighting conditions are considered collectively as the unit of data under which the Neural Processing Units 164 are trained, and the same lighting conditions are applied during the operation in machine leaning inference mode. That is, the multiple raw image frames together with the associated labeled data generated in training mode would be entered as a single unit of data into the machine learning training algorithm for generation of the Neural Network Parameter Set 165. Moreover, during machine leaning inference mode the object characterization processor 160 may selectively controls the light sources 176 based on input from a sensor, or based on a determination may be the Neural Processing Units 164. For example, the object characterization processor 160 may control the light sources 176 to illuminate the objects 55 in area 60 under a visible light spectrum under for steady state operation, but if the Neural Processing Units 164 detects the presence of a certain material, it then temporarily switches to a different second spectrum to obtain an additional image frame under. The additional image frame captured under the second spectrum may then be evaluated by the Neural Processing Units 164 to either confirm that the initial material determination was correct, or to more specifically differentiate and identify the material. In some embodiments such as described above, the Neural Processing Units 164 may comprise a first neural network to evaluate images captured under a first set of lighting conditions, and one or more additional neural network to evaluate images captured under respective additional lighting conditions.

Besides the control of lighting based on determinations made by the Neural Processing Units 164, the object characterization processor 160 may also control other automatic and/or real time processes based on the material characterization data. For example, the object characterization processor 160 may be coupled to process control electronics 174, which may comprise, for example, one or more actuators, servos, process controllers, lighting controls, and the like. For example, in some embodiments, the object characterization processor 160 may send a control signal to process control electronics 174 to adjust the operating speed of the conveyor belt 50 and/or actuate other machinery in the facility, to provide the location of a specific target object 55 to a sorting mechanism 178 to pick the material from the conveyor belt 50, or to activate alarms or warning indicators (for example, if an item of hazardous material has been detected). For example, in one embodiment, based on the material characterization data, the object characterization processor 160 recognizes that an object 55 comprising a predetermined material has been detected within the area 60. The object characterization processor 160 can then send material characterization data that comprises the coordinate information for the target object 55 to the sorting mechanism 178 to remove that object from the conveyor belt as described above. In other embodiments, the object characterization processor 160 may detect that too much, or not enough of, a specific material is being detected and operate process control electronics 174 to operate other machinery (such as other conveyor belts, or the operation of disc screen sorting devices) to increase or decrease the amount of those materials it is detecting.

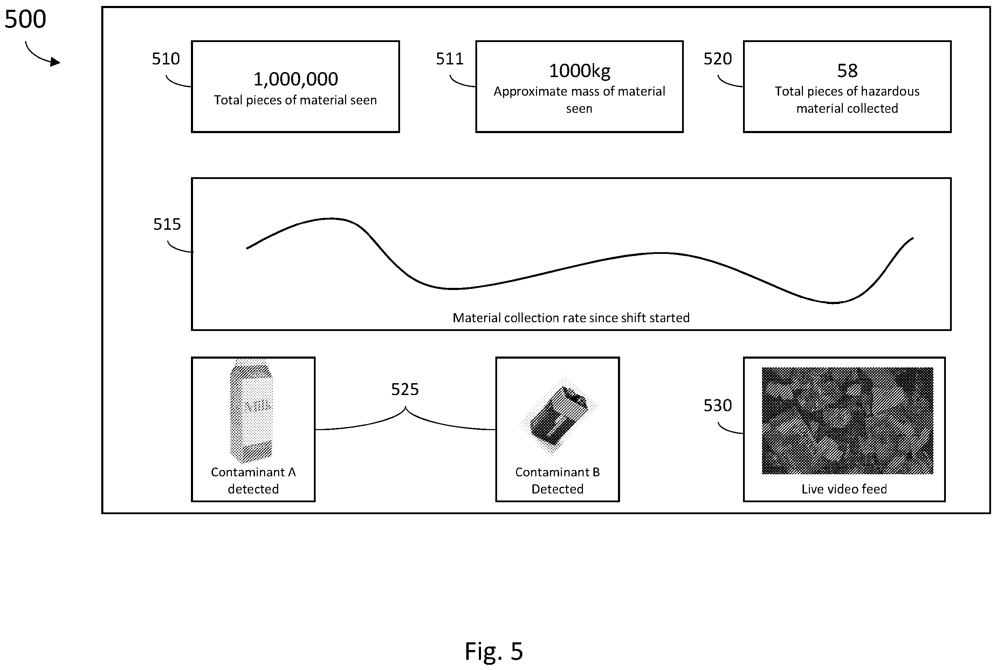

Figure 5 is a diagram illustrating generally at 500 an example display of material characterization data at a user interface device for one embodiment of the present disclosure. This display is intended to provide only an example of the manner in which material characterization data, and statistics and other information derived from the material characterization data by the object characterization processor 160, may be generated and displayed. As such, Figure 5 is not intended to be a limiting example. For example, at 510, statistics showing the cumulative total number of materials detected over a given period, and at 511 the estimated mass of those materials, may calculated by the object characterization processor 160. Estimated mass may be calculated, for example, by correlating the number of objects of each material type observed against a look-up table stored in the memory of object characterization processor 160 that provides a standard mass estimate for an item of that material. Moreover, the memory of object characterization processor 160 may be updated to include current market values for one or more of the materials detected so that the market value of that material collected by the facility and detected by the optical material characterization system 10 may be provided. In some embodiments, the displayed may be filtered to provide such statistics for specific materials. For example, the user may request the material characterization data for just aluminum cans over the past 24 hours. In that case, the display 500 may show information such as the total number of aluminum cans detected, an estimate of the total mass of aluminum cans detected, and the current market value for the aluminum cans detected. In some embodiments, material characterization data may be graphically displayed. For example, graphical data (shown at 515) may incrementally display the number of times a specific material has been detected over a previous time period. The object characterization processor 160 may also process the material characterization data to display statistics on hazardous material collected (shown at 520) or materials considered to be contaminant materials (shown at 525). In some embodiments, a live video feed of image frames from the imaging device 162 may be displayed (shown at 530).

Although the embodiments above each describe the optical material characterization system 10 operating in the context of a recycling and/or waste management facility, it should be appreciated that embodiments operating within the context of other facilities is expressly contemplated. For example, in one embodiment, the optical material characterization system 10 is implemented within the context of a facility that operates one or more anaerobic digesters. As would be appreciated by those skilled in the art, anaerobic digestion comprises a series of biological processes in which microorganisms break down biodegradable material in the absence of oxygen. The end product of this process may be used to produce biofuels, such as biogas, which may be combusted, for example to generate electricity and/or heat, or processed into renewable natural gas and transportation fuels. In one embodiment of the optical material characterization system 10, the conveyor belt 50 transports objects 55, which in this embodiment comprise food waste that serves as fuel to feed one or more anaerobic digestion vats in which anaerobic digestion takes place. In one such embodiment, the conveyor belt 50 may carry the food waste directly into the intake of an anaerobic digestion vat. The imaging device 162 captures images of the various objects 55 comprising food waste within area 60 and the object characterization processor 160 may be configured to detect and identify exactly what types of food waste will be entering the anaerobic digestion vat. Accordingly, the Neural Processing Units 164 will be trained and operated in both the machine learning training mode and machine leaning inference mode described above in the same matter as described above to identify different materials. However, instead of having the neural network parameter set 165 trained to detect and distinguish recycled materials such as aluminum cans, cardboard, and milk jugs, it is instead trained to detect and distinguish different food waste materials. The object characterization processor 160 can then calculate and output an indication of the total available energy (for example, available BTU) that will be supplied to the anaerobic digestion vat by the food waste materials in that image frame. For example, the Neural Processing Units 164 may be trained to identify food waste materials such as banana peels, apple cores, or indeterminate food waste material such as generic brown sludge. Using the processes described above for operation in machine leaning inference mode above, the Neural Processing Units 164 may analyze a captured image frame and identify the total mass respectively for each of the banana peels, apple cores, and generic brown sludge present on that section of the conveyor belt and reference data available in memory (e.g. a look-up table stored in the memory of object, characterization processor 160) to retrieve BTU/unit mass multipliers for each of these materials. The total available BTU is then obtained by multiplying the detected mass for each food waste material by its corresponding multiplier and summing the results. In some embodiments, based on the determined total BTU, the object characterization processor 160 may output control signals (e.g. via process control electronics 174) to vary the operation of other facility equipment. For example, the based on the BTU availability provided by the food waste detected by the Neural Processing Units 164, the object characterization processor 160 may adjust the speed of the conveyor belt 50 to maintain, or converge on, a target BTU input rate. In other implementations, other external devices and process flows for operating the anaerobic digestion vat may be controlled based on the BTU availability and/or materials detected by the Neural Processing Units 164. For example, in one embodiment, if a contaminant is detected that would adversely affect operation of the anaerobic digestion vat, that material may be identified and diverted off of the conveyor feeding the anaerobic digestion vat by a sorting robot or other deice such as described above. In other embodiments, the conveyor belt 50 may not carry the food waste directly into the intake of an anaerobic digestion vat, but instead load storage silos that are subsequently used to feed the anaerobic digestion vat. In such an embodiments, the BTU availability provided by the food waste detected by the Neural Processing Units 164 may be used to regulate the loading of food waste into the silos based on the BTU of materials loaded rather than mass or weight. In one embodiment, once the target BTU for a silo is obtained, the object characterization processor 160 may provide a signal indicating such to plant equipment to realign the conveyor belt 50 to feed another silo. In this way, a more accurate measurement of the BTU available from a particular silo can be established. It should therefore be appreciated that in still other embodiments, characterization of conveyed objects for still other applications are expressly contemplated.

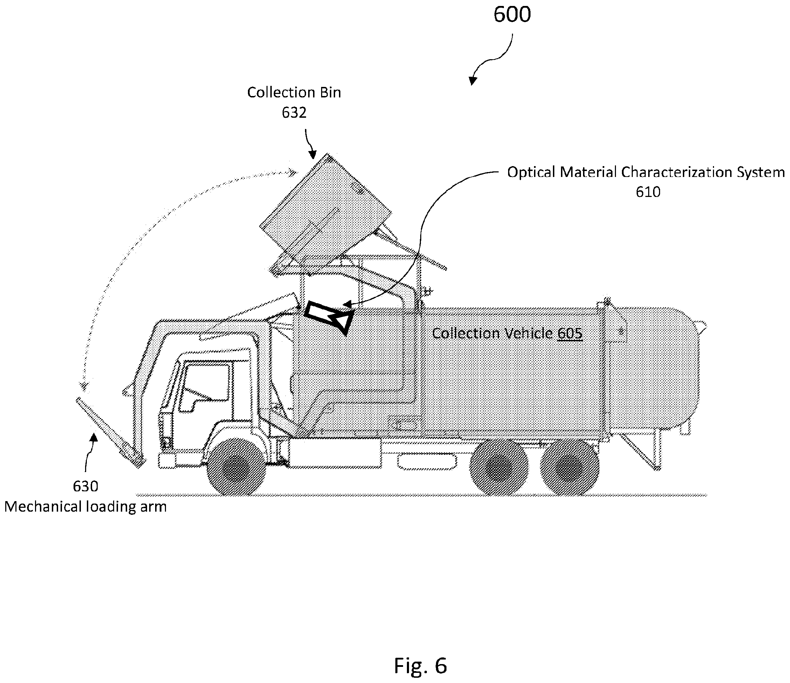

Figure 6 is a diagram illustrating generally at 600 another example implementation of the optical material characterization system 10 discussed above (which will now be referred to as optical material characterization system 610) adapted for use outside of a fixed facility, and instead implemented in a moving collection vehicle 605 such as, but not limited to, a waste collection truck. It should be understood that the features and elements described herein with respect to Figure 1 may be used in conjunction with, in combination with, or substituted for elements of Figure 6 and optical material characterization system 610, as well as any of the other embodiments discussed herein, and *vice versa.* Further, it should be understood that the functions, structures and other description of elements for embodiments described herein may apply to like named or described elements for any of the Figures and *vice versa.*

In some embodiments, object characterization processor 160, imaging device 162, one or more light sources 176, and other components of system 610 may be located onboard the collection vehicle 605 and function in the same manner as described above. In other embodiments, only a subset of the components of system 610 are located onboard the collection vehicle 605. For example, in one embodiment, the imaging device 162 and one or more optional light sources 176 may be located onboard the collection vehicle 605 while the object characterization processor 160 is located at a central station and is in wireless communication with the imaging device 162 and one or more light sources 176 such as through cellular or Wi-Fi, or other wireless communications technology. In that case, raw image frames from the imaging device 162 may be wirelessly transmitted to the central station for subsequent processing by neural processing units 164. In some embodiments, the raw image frames may instead be locally stored on a non-transient memory device (for example, such as removable memory card or disk) aboard the collection vehicle 605 and transferred to the object characterization processor 160 when the collection vehicle 605 arrived as the central station. In some embodiments, the optical material characterization system 610 may further comprise locally at the collection vehicle 605 at least one user interface device 170 and/or process control electronics 174. For example, in one embodiment in operation, the Collection Vehicle 605 includes a mechanical loading arm 630 with which it lifts a collection bin 632 in order to deposit the contents of the collection bin 632 into the collection vehicle 605. In one embodiment the loading arm 630 transports materials to be collected to a part of the collection vehicle, which may comprise an active or passive conveyance mechanism. In other embodiments, the collection bin 632 may be deposited into the vehicle 605 manually without the aid of a mechanical loading arm 630.

If as (and/or after) the materials enter the collection vehicle 605 the object characterization processor 160 detects an anomaly such as hazardous or other prohibited material, the optical material characterization system 610 may issue a warning or other form of specific instructions to the operator of the collection vehicle 605 via the onboard user interface device 170. Such a warning and/or other specific instructions may be tailored to the specific material identified by the system 610. Moreover, the process control electronics 174 may be used to control Mechanical Loading Arm 630 (or otherwise override local operation). For example, where object characterization processor 160 detects undesirable materials, it may send a control signal to the process control electronics 174, which in turn deactivates continued operation of the Mechanical Loading Arm 630 instead of, or in addition to, outputting a message to the onboard user interface device 170.

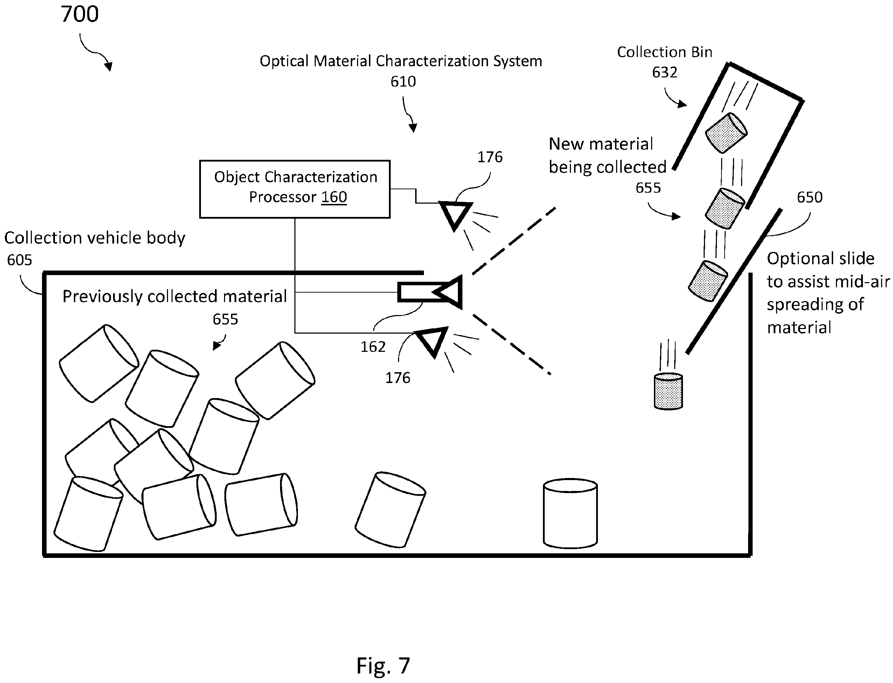

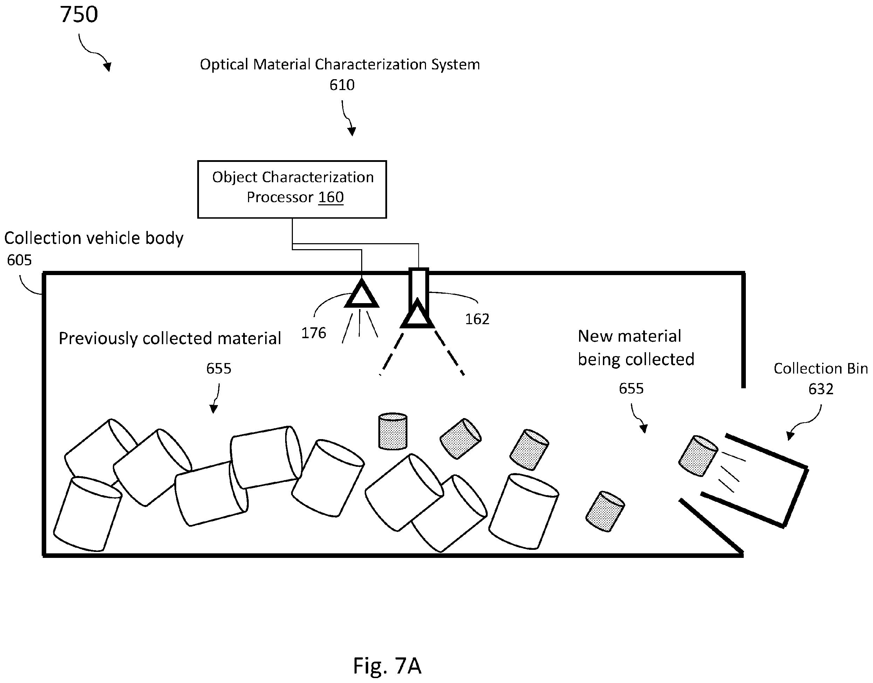

Figure 7 illustrates at 700 an example embodiment of optical material characterization system 610 in operation where the collection vehicle 605 receives material from collection bin 632 from above. That is, the collected material 655 (which would correspond to the target object 55 discussed above) can be fed (for example, gravity fed) into the collection vehicle 605. In some embodiments, the materials 655 may optionally travel down a conveyance mechanism 650 such as a slide or chute which may further function to spread materials out as they enter the vehicle. Upon entry into the collection vehicle 605, the collected material 655 pass through the field of view of imaging device 162 and are characterized in the same manner described above for system 10. As described above, the imaging device 162 is directed towards the collected material 655 entering the collection vehicle 605 produces an image signal that is delivered to the object characterization processor 160. Within the object characterization processor, these image frames are provided input to one or more neural network and artificial intelligence algorithms (shown as the Neural Processing Units 164) to locate and identify material appearing within the image frames. Figure 7A illustrates at 750 an another example embodiment of optical material characterization system 610 in operation where the collection vehicle 605 is back or side loaded with material from collection bin 632. The imaging device 162 is directed towards the collected material 655 entering the collection vehicle 605 and produces an image signal that is delivered to the object characterization processor 160. Within the object characterization processor, these image frames are provided input to one or more neural network and artificial intelligence algorithms (shown as the Neural Processing Units 164) to locate and identify material appearing within the image frames.

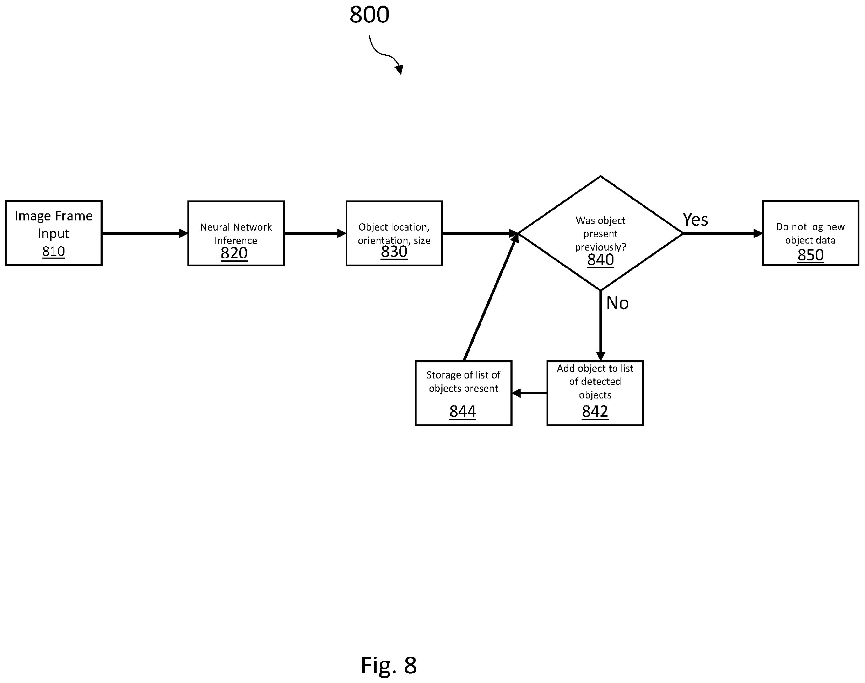

In either of the implementations shown in Figures 7 or 7A, newly collected material 655 will tend to be deposited over previously collected material 655. As such, as shown in Figure 8, image frames captured by the imaging device 162 of collected material 655 within the body of collection vehicle 605 (shown at 810) may include a combination of newly collected material 655 and previously collected material 655. These image frames 810 may be fed into the Machine learning inference algorithm 220 of the Neural Processing Units 164 (shown at 820) in order to detect, for example, object material type, location, shape, orientation and size (shown at 830) of the collected material 655 appearing in each frame, in the same manner as described above for system 10. In one embodiment, this information is then processed by the optical material characterization system 610 to determine which of those objects were previously present within the collection vehicle 605, and which are newly present (shown at 840). For example, if there is a high correlation of characteristics (for example object material type, location, shape, orientation and/or size) between an item of collected material 655 appearing in the image frame 810 and a previously identified object from a previously image frame, then that item of collected material 655 is not considered to be a newly collected object (shown at 850). If there is no such correlation, the item of collected material 655 is considered to be a newly collected object. In one embodiment, the material characterization system 610 comprises a memory 844 (for example, Data Storage 166) where a list or catalog of objects collected and characterized by optical material characterization system 610 are stored. Once newly collected objects 655 are characterized, they are added to the list or catalog of objects collected (shown at 842) and from that point forward are considered previously collected objects 655.

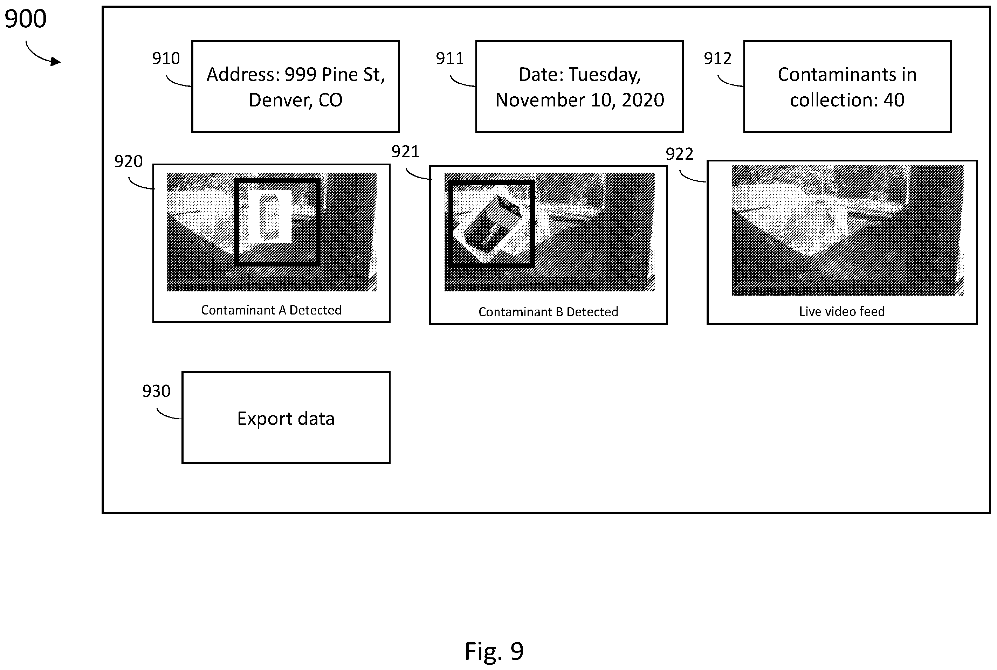

Figure 9 is a diagram illustrating generally at 900 another example display of material characterization data at a user interface device for one embodiment of the present disclosure. In one embodiment, this example display of material characterization data is used in combination with the optical material characterization system 610 and may be displayed at a local user interface device 170 located aboard collection vehicle 605, or at a user interface device 170 located remote from collection vehicle 605, such as at a central station, for example. As shown at 910, image frames captured by the optical material characterization system 610 may be further tagged with location information (shown at 910) and time and date information (shown at 920) so that collected objects 655 may be correlated to where and when they were collected. In some embodiments, when am object 655 considered to be a contaminant is collected, such information may be displayed on the user interface device 170 along with optional images of the offending objects (shown at 920 and 921). A count of the number of collected objects considered contaminants may also be displayed (as shown at 912). This information may allow the vehicle operator to locate the contaminant for removal or other mitigation. Moreover, this information may be used to fine customers that place contaminants into the collection bin, or alternatively provide rebates to customers if they recycle "high value" materials. In some embodiments, a live video feed of image frames captured by imaging device 162 may be displayed (shown at 922).

In various alternative embodiments, system elements, method steps, or examples described throughout this disclosure (such as the object characterization processor, neural processing units, process control electronics, sorting robots and/or sub-parts of any thereof, for example) may be implemented using one or more computer systems, field programmable gate arrays (FPGAs), or similar devices and/or comprising a processor coupled to a memory and executing code to realize those elements, processes, steps or examples, said code stored on a non-transient data storage device. Therefore other embodiments of the present disclosure may include elements comprising program instructions resident on computer readable media which when implemented by such computer systems, enable them to implement the embodiments described herein. As used herein, the term "computer readable media" refers to tangible memory storage devices having non-transient physical forms. Such non-transient physical forms may include computer memory devices, such as but not limited to punch cards, magnetic disk or tape, any optical data storage system, flash read only memory (ROM), non-volatile ROM, programmable ROM (PROM), erasable-programmable ROM (E-PROM), random access memory (RAM), or any other form of permanent, semi-permanent, or temporary memory storage system or device having a physical, tangible form. Program instructions include, but are not limited to computer-executable instructions executed by computer system processors and hardware description languages such as Very High Speed Integrated Circuit (VHSIC) Hardware Description Language (VHDL).

## Claims

1. A system (10) comprising:
at least one imaging device (162) configured to generate a set of image frames of target objects (55) within an area (60);
wherein the area (60) comprises a portion of a conveyance mechanism (650), and wherein the conveyance mechanism comprises a conveyor belt (50), a slide, a chute, an opening through which the target objects (55) are dropped, or a mechanism through which the target objects are gravity fed;
an object characterization processor (160) coupled to the at least one imaging device and comprising one or more Neural Processing Units (164) and a Neural Network Parameter Set (165), wherein the Neural Network Parameter Set stores learned parameters utilized by the one or more Neural Processing Units for characterizing the target objects, wherein the object characterization processor is configured to:
determine a set of cropped image frames from an image frame received from the at least one imaging device by sweeping an image window over the image frame;
determine whether a specific material is detected at a respective center location within each of the set of cropped image frames by feeding the set of cropped image frames into the one or more Neural Processing Units;
generate a composite material image for each specific material, each composite material image illustrating where a respective specific material is present in the image frame; and
wherein the one or more Neural Processing Units output material characterization data comprising: a detection of the target objects of one or more specific materials within the image frame and one or more attributes associated with the target objects.

2. The system (10) of claim 1, wherein the one or more attributes associated with the target objects comprises a location, a shape, a size, an orientation, and dimensions of at least one of the target objects.

3. The system (10) of claim 1, wherein the object characterization processor (160) is further configured to output the material characterization data to a sorting robot, wherein the sorting robot is configured to identify locations of the target objects using the material characterization data.

4. The system (10) of claim 3, wherein the composite material image for each specific material identifies a specific surface area of a first target object having features that present a surface most suitable for gripping by the sorting robot.

5. The system (10) of claim 1, wherein the object characterization processor (160) is further configured to output a control signal to control operation of a device.

6. The system (10) of claim 1, wherein the object characterization processor (160) is configured to save the material characterization data either to a Data Storage (166), or to communicate the material characterization data to a remote device over a remote network (172).

7. The system (10) of claim 1, further comprising a user interface device (170) coupled to the object characterization processor (160), wherein the object characterization processor is configured to display the material characterization data, and statistics and other information derived from the material characterization data via the user interface device.

8. The system (10) of claim 7, wherein the user interface device (170) is communicatively coupled to the object characterization processor (160) via a network.

9. The system (10) of claim 1, wherein the at least one imaging device (162) comprises at least one of a visual spectrum image sensor, a hyperspectral image sensor, an infrared image sensor, an ultraviolet image sensor, or a magnetic image sensor.

10. The system (10) of claim 1, wherein the object characterization processor (160) is integrated within the at least one imaging device (162).

11. The system (10) of claim 1, wherein the object characterization processor (160) is coupled to receive the set of image frames from the at least one imaging device (162) by either a wired or wireless communication link.

12. The system (10) of claim 1, wherein the object characterization processor (160) is further configured to output a signal to adjust a speed of the conveyance mechanism (650).

13. A method, comprising:
receiving a set of image frames from an imaging device (162), wherein the set of image frames is of target objects within an area (60), wherein the area (60) comprises a portion of a conveyance mechanism (650), and wherein the conveyance mechanism comprises a conveyor belt (50), a slide, a chute, an opening through which the target objects (55) are dropped, or a mechanism through which the target objects are gravity fed;
using an object characterization processor to:
determine a set of cropped image frames from an image frame received from the imaging device by sweeping an image window over the image frame;
determine whether a specific material is detected at a respective center location within each of the set of cropped image frames by feeding the set of cropped image frames into one or more Neural Processing Units;
generate a composite material image for each specific material, each composite material image illustrating where a respective specific material is present in the image frame; and
output material characterization data including: a detection of the target objects of one or more specific materials within the image frame and one or more attributes associated with the target objects.

14. The method of claim 13, wherein the one or more attributes associated with the target object comprises a location, a shape, a size, an orientation, and dimensions of at least one of the target objects.

15. The method of claim 13, further comprising outputting the material characterization data to a sorting robot, wherein the sorting robot is configured to identify locations of the target objects using the material characterization data.

16. The method of claim 15, wherein the composite material image for each specific material identifies a specific surface area of a first target object having features that present a surface most suitable for gripping by the sorting robot.

17. The method of claim 13, further comprising outputting a control signal to control operation of a device.

18. The method of claim 13, further comprising saving the material characterization data is to a Data Storage (166), or communicating the material characterization data to a remote device over a remote network (172).

19. The method of claim 13, further comprising outputting a signal to adjust a speed of the conveyance mechanism (650).

20. The method of claim 13, further comprising displaying the material characterization data, and statistics and other information derived from the material characterization data via a user interface device (170).

## Patentansprüche

1. System (10), das Folgendes umfasst:
mindestens ein Bildgebungsgerät (162), konfiguriert zum Erzeugen einer Reihe von Bildrahmen von Zielobjekten (55) innerhalb eines Bereichs (60);
wobei der Bereich (60) einen Abschnitt eines Fördermechanismus (650) umfasst und wobei der Fördermechanismus ein Förderband (50), eine Rutsche, eine Schurre, eine Öffnung, durch die die Zielobjekte (55) fallen gelassen werden, oder einen Mechanismus umfasst, durch den die Zielobjekte durch Schwerkraft zugeführt werden;
einen Objektcharakterisierungsprozessor (160), der mit dem mindestens einen Bildgebungsgerät gekoppelt ist und eine oder mehrere neuronale Verarbeitungseinheiten (164) sowie einen Neuronales-Netzwerk-Parametersatz (165) umfasst, wobei der Neuronales-Netzwerk-Parametersatz von den ein oder mehreren neuronalen Verarbeitungseinheiten zur Charakterisierung der Zielobjekte benutzte gelernte Parameter speichert, wobei der Objektcharakterisierungsprozessor konfiguriert ist zum:
Bestimmen einer Reihe von ausgeschnittenen Bildrahmen aus einem von dem mindestens einen Bildgebungsgerät empfangenen Bildrahmen durch Führen eines Bildfensters über den Bildrahmen;
Feststellen, ob ein spezifisches Material an einer jeweiligen zentralen Position innerhalb jedes aus der Reihe von ausgeschnittenen Bildrahmen erkannt wird, durch Führen der Reihe von ausgeschnittenen Bildrahmen in die ein oder mehreren neuronalen Verarbeitungseinheiten;
Erzeugen eines Verbundmaterialbildes für jedes spezifische Material, wobei jedes Verbundmaterialbild veranschaulicht, wo ein jeweiliges spezifisches Material im Bildrahmen vorhanden ist; und
wobei die ein oder mehreren neuronalen Verarbeitungseinheiten Materialcharakterisierungsdaten ausgeben, die Folgendes umfassen: eine Erkennung der Zielobjekte aus einem oder mehreren spezifischen Materialien innerhalb des Bildrahmens und ein oder mehrere mit den Zielobjekten assoziierte Attribute.

2. System (10) nach Anspruch 1, wobei die ein oder mehreren mit den Zielobjekten assoziierten Attribute eine Position, eine Form, eine Größe, eine Orientierung und Abmessungen mindestens eines der Zielobjekte umfassen.

3. System (10) nach Anspruch 1, wobei der Objektcharakterisierungsprozessor (160) ferner zum Ausgeben der Materialcharakterisierungsdaten an einen Sortierroboter konfiguriert ist, wobei der Sortierroboter zum Identifizieren von Positionen der Zielobjekte anhand der Materialcharakterisierungsdaten konfiguriert ist.

4. System (10) nach Anspruch 3, wobei das Verbundmaterialbild für jedes spezifische Material einen spezifischen Oberflächenbereich eines ersten Zielobjekts mit Merkmalen identifiziert, die eine Oberfläche darstellen, die sich am besten zum Greifen durch den Sortierroboter eignet.

5. System (10) nach Anspruch 1, wobei der Objektcharakterisierungsprozessor (160) ferner zum Ausgeben eines Steuersignals zum Steuern des Betriebs eines Geräts konfiguriert ist.

6. System (10) nach Anspruch 1, wobei der Objektcharakterisierungsprozessor (160) zum Speichern der Materialcharakterisierungsdaten in einem Datenspeicher (166) oder zum Übermitteln der Materialcharakterisierungsdaten über ein Fernnetzwerk (172) an ein entferntes Gerät konfiguriert ist.

7. System (10) nach Anspruch 1, das ferner ein mit dem Objektcharakterisierungsprozessor (160) gekoppeltes Benutzeroberflächengerät (170) umfasst, wobei der Objektcharakterisierungsprozessor zum Anzeigen der Materialcharakterisierungsdaten sowie von Statistiken und anderen aus den Materialcharakterisierungsdaten abgeleiteten Informationen über das Benutzeroberflächengerät konfiguriert ist.

8. System (10) nach Anspruch 7, wobei das Benutzeroberflächengerät (170) über ein Netzwerk kommunikativ mit dem Objektcharakterisierungsprozessor (160) gekoppelt ist.

9. System (10) nach Anspruch 1, wobei das mindestens eine Bildgebungsgerät (162) mindestens einen von einem Sichtbares-Spektrum-Bildsensor, einem hyperspektralen Bildsensor, einem Infrarot-Bildsensor, einem Ultraviolett-Bildsensor und einem magnetischen Bildsensor umfasst.

10. System (10) nach Anspruch 1, wobei der Objektcharakterisierungsprozessor (160) in das mindestens eine Bildgebungsgerät (162) integriert ist.

11. System (10) nach Anspruch 1, wobei der Objektcharakterisierungsprozessor (160) zum Empfangen der Reihe von Bildrahmen von dem mindestens einen Bildgebungsgerät (162) über eine drahtgebundene oder drahtlose Kommunikationsverbindung gekoppelt ist.

12. System (10) nach Anspruch 1, wobei der Objektcharakterisierungsprozessor (160) ferner zum Ausgeben eines Signals zum Justieren einer Geschwindigkeit des Fördermechanismus (650) konfiguriert ist.

13. Verfahren, das Folgendes beinhaltet:
Empfangen einer Reihe von Bildrahmen von einem Bildgebungsgerät (162), wobei die Reihe von Bildrahmen die von Zielobjekten innerhalb eines Bereichs (60) ist, wobei der Bereich (60) einen Abschnitt eines Fördermechanismus (650) umfasst und wobei der Fördermechanismus ein Förderband (50), eine Rutsche, eine Schurre, eine Öffnung, durch die die Zielobjekte (55) fallen gelassen werden, oder einen Mechanismus umfasst, durch den die Zielobjekte durch Schwerkraft zugeführt werden;
Verwenden eines Objektcharakterisierungsprozessors zum:
Bestimmen einer Reihe von ausgeschnittenen Bildrahmen aus einem von dem Bildgebungsgerät empfangenen Bildrahmen durch Führen eines Bildfensters über den Bildrahmen;
Feststellen, ob ein spezifisches Material an einer jeweiligen zentralen Position innerhalb jedes aus der Reihe von ausgeschnittenen Bildrahmen erkannt wird, durch Führen der Reihe von ausgeschnittenen Bildrahmen in eine oder mehrere neuronale Verarbeitungseinheiten;
Erzeugen eines Verbundmaterialbildes für jedes spezifische Material, wobei jedes Verbundmaterialbild veranschaulicht, wo ein jeweiliges spezifisches Material im Bildrahmen vorhanden ist; und
Ausgeben von Materialcharakterisierungsdaten, die Folgendes umfassen: eine Erkennung der Zielobjekte aus einem oder mehreren spezifischen Materialien innerhalb des Bildrahmens und ein oder mehrere mit den Zielobjekten assoziierte Attribute.

14. Verfahren nach Anspruch 13, wobei die ein oder mehreren mit dem Zielobjekt assoziierten Attribute eine Position, eine Form, eine Größe, eine Orientierung und Abmessungen mindestens eines der Zielobjekte umfassen.

15. Verfahren nach Anspruch 13, das ferner das Ausgeben der Materialcharakterisierungsdaten an einen Sortierroboter umfasst, wobei der Sortierroboter zum Identifizieren von Positionen der Zielobjekte anhand der Materialcharakterisierungsdaten konfiguriert ist.

16. Verfahren nach Anspruch 15, wobei das Verbundmaterialbild für jedes spezifische Material einen spezifischen Oberflächenbereich eines ersten Zielobjekts mit Merkmalen identifiziert, die eine Oberfläche darstellen, die sich am besten zum Greifen durch den Sortierroboter eignet.

17. Verfahren nach Anspruch 13, das ferner das Ausgeben eines Steuersignals zur Steuerung des Betriebs eines Geräts beinhaltet.

18. Verfahren nach Anspruch 13, das ferner das Speichern der Materialcharakterisierungsdaten in einem Datenspeicher (166) oder das Übermitteln der Materialcharakterisierungsdaten über ein Fernnetzwerk (172) an ein entferntes Gerät beinhaltet.

19. Verfahren nach Anspruch 13, das ferner das Ausgeben eines Signals zum Justieren einer Geschwindigkeit des Fördermechanismus (650) beinhaltet.

20. Verfahren nach Anspruch 13, das ferner das Anzeigen der Materialcharakterisierungsdaten sowie von Statistiken und anderen aus den Materialcharakterisierungsdaten abgeleiteten Informationen über ein Benutzeroberflächengerät (170) beinhaltet.

## Revendications

1. Système (10) comprenant :
au moins un dispositif d'imagerie (162) configuré pour générer un ensemble de trames d'image d'objets cibles (55) au sein d'une zone (60) ;
dans lequel la zone (60) comprend une partie d'un mécanisme de transport (650), et dans lequel le mécanisme de transport comprend une bande transporteuse (50), une glissière, une goulotte, une ouverture à travers laquelle les objets cibles (55) sont lâchés, ou un mécanisme à travers lequel les objets cibles sont alimentés par gravité ;
un processeur de caractérisation d'objets (160) couplé à l'au moins un dispositif d'imagerie et comprenant une ou plusieurs unités de traitement neuronal (164) et un ensemble de paramètres de réseau neuronal (165), dans lequel l'ensemble de paramètres de réseau neuronal stocke des paramètres appris utilisés par les une ou plusieurs unités de traitement neuronal pour caractériser les objets cibles, dans lequel le processeur de caractérisation d'objets est configuré pour :
déterminer un ensemble de trames d'image recadrées à partir d'une trame d'image reçue à partir de l'au moins un dispositif d'imagerie par balayage d'une fenêtre d'image sur la trame d'image ;
déterminer si un matériau spécifique est détecté à un emplacement central respectif au sein de chacun de l'ensemble de trames d'image recadrées par alimentation de l'ensemble de trames d'image recadrées dans les une ou plusieurs unités de traitement neuronal ;
générer une image composite de matériau pour chaque matériau spécifique, chaque image composite de matériau illustrant où un matériau spécifique respectif est présent dans la trame d'image ; et
dans lequel les une ou plusieurs unités de traitement neuronal délivrent en sortie des données de caractérisation matérielle comprenant : une détection des objets cibles d'un ou plusieurs matériaux spécifiques au sein de la trame d'image et un ou plusieurs attributs associés aux objets cibles.

2. Système (10) selon la revendication 1, dans lequel les un ou plusieurs attributs associés aux objets cibles comprennent un emplacement, une forme, une taille, une orientation, et des dimensions d'au moins l'un des objets cibles.

3. Système (10) selon la revendication 1, dans lequel le processeur de caractérisation d'objets (160) est en outre configuré pour délivrer en sortie les données de caractérisation matérielle à un robot de tri, dans lequel le robot de tri est configuré pour identifier des emplacements des objets cibles en utilisant les données de caractérisation matérielle.

4. Système (10) selon la revendication 3, dans lequel l'image composite de matériau pour chaque matériau spécifique identifie une aire de surface spécifique d'un premier objet cible ayant des caractéristiques qui présentent une surface la plus appropriée pour une préhension par le robot de tri.

5. Système (10) selon la revendication 1, dans lequel le processeur de caractérisation d'objets (160) est en outre configuré pour délivrer en sortie un signal de commande pour commander un fonctionnement d'un dispositif.

6. Système (10) selon la revendication 1, dans lequel le processeur de caractérisation d'objets (160) est configuré pour sauvegarder les données de caractérisation matérielle soit dans un stockage de données (166), soit pour communiquer les données de caractérisation matérielle à un dispositif distant sur un réseau distant (172).

7. Système (10) selon la revendication 1, comprenant en outre un dispositif d'interface utilisateur (170) couplé au processeur de caractérisation d'objets (160), dans lequel le processeur de caractérisation d'objets est configuré pour afficher les données de caractérisation matérielle, et des statistiques et d'autres informations dérivées des données de caractérisation matérielle par le biais du dispositif d'interface utilisateur.

8. Système (10) selon la revendication 7, dans lequel le dispositif d'interface utilisateur (170) est couplé en communication au processeur de caractérisation d'objets (160) par le biais d'un réseau.

9. Système (10) selon la revendication 1, dans lequel l'au moins un dispositif d'imagerie (162) comprend au moins l'un parmi un capteur d'image de spectre visible, un capteur d'image hyperspectral, un capteur d'image infrarouge, un capteur d'image ultraviolet, ou un capteur d'image magnétique.

10. Système (10) selon la revendication 1, dans lequel le processeur de caractérisation d'objets (160) est intégré au sein de l'au moins un dispositif d'imagerie (162).

11. Système (10) selon la revendication 1, dans lequel le processeur de caractérisation d'objets (160) est couplé pour recevoir l'ensemble de trames d'image à partir de l'au moins un dispositif d'imagerie (162) par une liaison de communication soit filaire soit sans fil.

12. Système (10) selon la revendication 1, dans lequel le processeur de caractérisation d'objets (160) est en outre configuré pour délivrer en sortie un signal pour ajuster une vitesse du mécanisme de transport (650).

13. Procédé, comprenant :
une réception d'un ensemble de trames d'image à partir d'un dispositif d'imagerie (162), dans lequel l'ensemble de trames d'image est celui d'objets cibles au sein d'une zone (60), dans lequel la zone (60) comprend une partie d'un mécanisme de transport (650), et dans lequel le mécanisme de transport comprend une bande transporteuse (50), une glissière, une goulotte,
une ouverture à travers laquelle les objets cibles (55) sont lâchés, ou un mécanisme à travers lequel les objets cibles sont alimentés par gravité ;
une utilisation d'un processeur de caractérisation d'objets pour :
déterminer un ensemble de trames d'image recadrées à partir d'une trame d'image reçue à partir du dispositif d'imagerie par balayage d'une fenêtre d'image sur la trame d'image ;
déterminer si un matériau spécifique est détecté à un emplacement central respectif au sein de chacun de l'ensemble de trames d'image recadrées par alimentation de l'ensemble de trames d'image recadrées dans une ou plusieurs unités de traitement neuronal ;
générer une image composite de matériau pour chaque matériau spécifique, chaque image composite de matériau illustrant où un matériau spécifique respectif est présent dans la trame d'image ; et
délivrer en sortie des données de caractérisation matérielle incluant : une détection des objets cibles d'un ou plusieurs matériaux spécifiques au sein de la trame d'image et un ou plusieurs attributs associés aux objets cibles.

14. Procédé selon la revendication 13, dans lequel les un ou plusieurs attributs associés à l'objet cible comprennent un emplacement, une forme, une taille, une orientation, et des dimensions d'au moins l'un des objets cibles.

15. Procédé selon la revendication 13, comprenant en outre une délivrance en sortie des données de caractérisation matérielle à un robot de tri, dans lequel le robot de tri est configuré pour identifier des emplacements des objets cibles en utilisant les données de caractérisation matérielle.

16. Procédé selon la revendication 15, dans lequel l'image composite de matériau pour chaque matériau spécifique identifie une aire de surface spécifique d'un premier objet cible ayant des caractéristiques qui présentent une surface la plus appropriée pour une préhension par le robot de tri.

17. Procédé selon la revendication 13, comprenant en outre une délivrance en sortie d'un signal de commande pour commander un fonctionnement d'un dispositif.

18. Procédé selon la revendication 13, comprenant en outre une sauvegarde des données de caractérisation matérielle dans un stockage de données (166), ou une communication des données de caractérisation matérielle à un dispositif distant sur un réseau distant (172).

19. Procédé selon la revendication 13, comprenant en outre une délivrance en sortie d'un signal pour ajuster une vitesse du mécanisme de transport (650).

20. Procédé selon la revendication 13, comprenant en outre un affichage des données de caractérisation matérielle, et de statistiques et d'autres informations dérivées des données de caractérisation matérielle par le biais d'un dispositif d'interface utilisateur (170).
